(19) **Europäisches Patentamt / European Patent Office / Office européen des brevets**

(11) **EP 1 835 637 A2**

(12) # EUROPEAN PATENT APPLICATION

(43) Date of publication:
**19.09.2007 Bulletin 2007/38**

(51) Int Cl.:
***H04B 7/01*** (2006.01)

(21) Application number: **07103832.7**

(22) Date of filing: **09.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **13.03.2006 US 374363**

(71) Applicant: **Honeywell International, Inc.
Morristown, New Jersey 07962 (US)**

(72) Inventor: **FEDORA, Neal R
Clearwater, FL 33763-4418 (US)**

(74) Representative: **Haley, Stephen
Gill Jennings & Every LLP
Broadgate House
7 Eldon Street
London EC2M 7LH (GB)**

(54) **A method and system to correct for Doppler shift in moving nodes of a wireless network**

(57) A method to reduce Doppler induced errors in mobile nodes of a wireless network. The method includes receiving a Doppler shifted signal having a Doppler shifted transmission frequency at a mobile node moving at velocity, measuring an acceleration of the mobile node in three directions, generating an array of Doppler shifted frequency estimates based on the measured acceleration and a previously generated pseudo-transmission frequency, generating a current pseudo-transmission frequency based on the array of Doppler shifted frequency estimates and tracking the Doppler shifted transmission frequency of the received signal to the current pseudo-transmission frequency. In this manner, the mobile node nominally tracks and decodes a Doppler shifted signal.

Fig. 1

EP 1 835 637 A2

**Description**

Mobile nodes in a wireless network are often moving with respect to the transmitter that transmits the wireless signals to the mobile node. In an exemplary case, a user of a cell phone drives on a highway in a direction that is moving away from a cell tower. In some cases the mobile node is moving fast enough for the carrier frequency of the signal received at the mobile node to experience a Doppler shift. The Doppler shift causes errors in the demodulated data in the mobile node. Such errors produce noise on the received signal and the bit error rate (BER) of the system is degraded. In some cases, the errors result in the signal being dropped.

As the frequency of the transmitted signal (and corresponding bandwidth) increases, the phase change of the Doppler shift increases, since the Doppler shift is proportional to the frequency of the transmitted signal. As technologies for ultra-wide-band (UWB) wireless and other high bandwidth wireless systems are implemented, the effects of Doppler shifting on the BER can become problematic.

It is desirable to offset the effects of Doppler shifting on signals received by or transmitted from moving network nodes.

One aspect of the present invention provides a method to reduce Doppler induced errors in mobile nodes of a wireless network. The method includes receiving a Doppler shifted signal having a Doppler shifted transmission frequency at a mobile node moving at a velocity, measuring an acceleration of the mobile node in three orthogonal directions, generating an array of Doppler shifted frequency estimates based on the measured acceleration and a previously generated pseudo-transmission frequency, generating a current pseudo-transmission frequency based on the array of Doppler shifted frequency estimates and tracking the Doppler shifted transmission frequency of the received signal to the current pseudo-transmission frequency.

Another aspect of the present invention provides a Doppler-shift error-reducing mobile node in a wireless network. The mobile node includes an antenna to receive a Doppler shifted signal having a Doppler shifted transmission frequency, a velocity calculating unit including an accelerometer to determine a velocity of the mobile node, a Doppler shifting unit to generate an array of Doppler shifted frequency estimates based on the change in velocity of the mobile node, a frequency checking unit to match a frequency in the array of Doppler shifted frequency estimates to the Doppler shifted transmission frequency of the received Doppler shifted signal and to generate a pseudo-transmission frequency, and a tracking loop unit to lock the pseudo-transmission frequency with the received Doppler shifted signal, wherein the pseudo-transmission frequency is about the transmission frequency. The Doppler shifted signal is emitted from a transmitter as a transmission signal having a transmission frequency.

Another aspect of the present invention provides a program product comprising program instructions, embodied on a storage medium. The program instructions are cause a programmable processor to receive a signal having a Doppler shifted transmission frequency at a mobile node moving at a velocity, measure a mobile node acceleration in three orthogonal directions, generate an array of Doppler shifted frequency estimates based on the measured acceleration and a previously generated pseudo-transmission frequency, generate a current pseudo-transmission frequency based on the array of Doppler shifted frequency estimates, track the Doppler shifted transmission frequency of the received signal to the current pseudo-transmission frequency, decode the data on the received signal based on the tracking of Doppler shifted transmission frequency of the received signal to the current pseudo-transmission frequency, and update the current pseudo-transmission frequency.

Figure 1 is a block diagram of wireless network including one embodiment of a mobile node.

Figure 2 is a block diagram of one embodiment of a mobile node.

Figures 3A and 3B are flow diagrams of embodiments of a method to reduce Doppler induced errors in mobile nodes of a wireless network.

Figure 4 is a block diagram of one embodiment of a mobile node.

Figure 5 is a flow diagram of one embodiment of portions of a method to reduce Doppler induced errors in mobile nodes of a wireless network.

Figure 6 is a block diagram of one embodiment of a mobile node.

Figure 7 is a flow diagram of one embodiment of portions of a method to reduce Doppler induced errors in mobile nodes of a wireless network.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical changes may be made without departing from the scope of the present invention. The following detailed description is, therefore, not to be taken in a limiting sense.

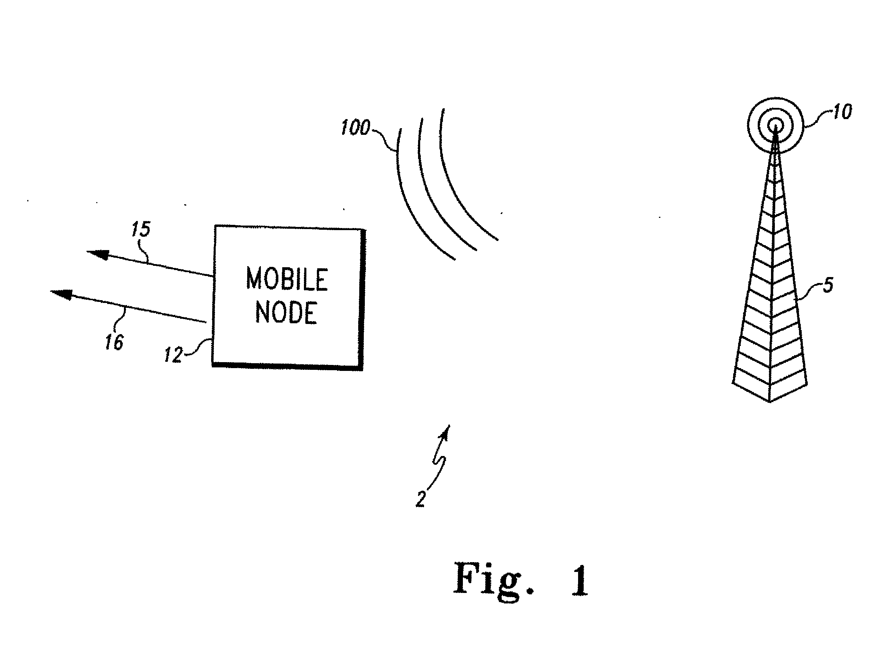

Figure 1 is a block diagram of wireless network 2 including one embodiment of a mobile node 12 also referred to here as "Doppler-shift error-reducing mobile node 12." The wireless network 2 includes a transmitter 5, also referred to here as "cellular transmission tower 5," emitting a signal 10. The transmission signal 10 propagates toward the mobile node 12 where it is received as Doppler shifted signal 100 due to the receiver dynamics. The Doppler shifted signal 100 is also referred to as "received signal 100." As shown in Figure 1, the mobile node 12 moves away from the cellular transmission tower 5 in a direction generally indicated by the velocity vector 16, also referred to here as "velocity 16." As the direction and/or magnitude of the velocity 16 of the mobile node 12 changes, the mobile node 12 experiences an acceleration, which is shown in Figure 1 in the direction generally indicated by the acceleration vector 15, also referred to here as "acceleration 15."

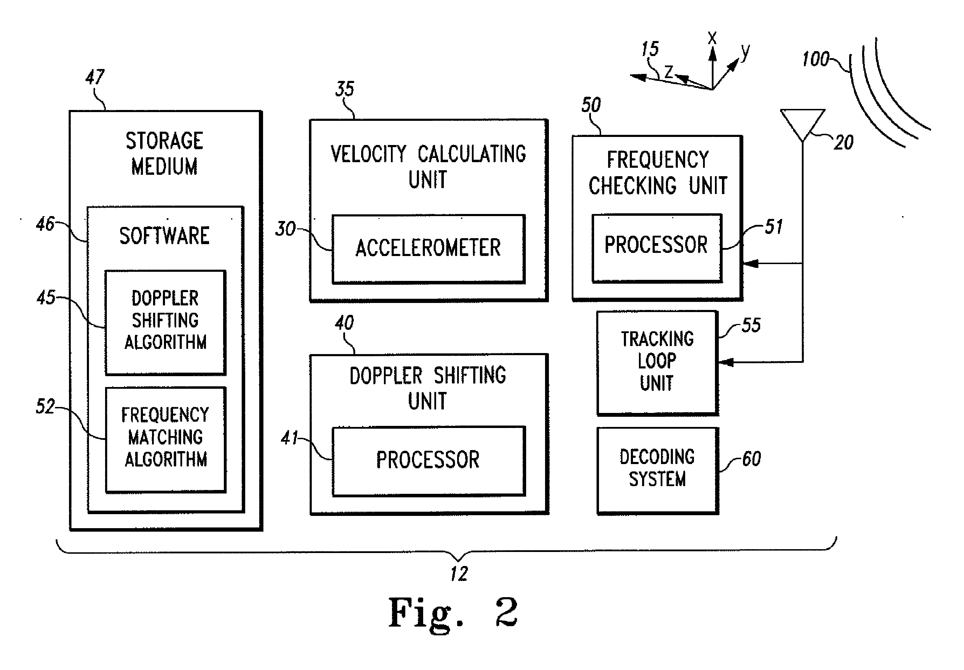

Figure 2 is a block diagram of one embodiment of the mobile node 12. The mobile node 12 comprises an antenna 20, a velocity calculating unit 35, a Doppler shifting unit 40, a storage medium 47, a frequency checking unit 50, a tracking loop unit 55, and a decoding system 60.

The antenna 20 receives the Doppler shifted signal 100 (Figure 1) having a Doppler shifted transmission frequency $f_{DST}$. The signal received at the antenna 20 is emitted from the transmitter 5 (Figure 1) as a transmission signal having a transmission frequency $f_T$. The Doppler shifted signal 100 received by the antenna 20 is input to the frequency checking unit 50 and the tracking loop unit 55.

The velocity calculating unit 35 includes an accelerometer 30. The accelerometer measures acceleration in three directions, such as directions X, Y and Z indicated as orthogonal vectors that form a basis for the acceleration 15. The three directions in which the acceleration 15 is measured are referred to here as "X, Y, and Z." The velocity calculating unit 35 determines a velocity of the mobile node 12 based on the measured accelerations 15, also referred to here as $A_X$, $A_Y$, and $A_Z$, where $A_X$ indicates the acceleration in the $i^{th}$ direction. The determined velocity is equal to or about equal to the velocity 16 (Figure 1). In one implementation of this embodiment, the accelerometer 30 includes a processor (not shown).

The Doppler-shift error-reducing mobile node 12 further comprises software 46. The software 46 comprises appropriate program instructions that, when executed by the processors 41 and 51, cause the processors 41 and 51 to perform the processing described here as being carried out by the software 46. Such program instructions are stored on or otherwise embodied on one or more items of storage media 47 (only one of which is shown in Figure 2).

The software 46 comprises a Doppler shifting algorithm 45 which is executed by a processor 41 in the Doppler shifting unit 40. The software 46 further comprises a frequency matching algorithm 52, which is executed by a processor 51 in the frequency checking unit 50.

The Doppler shifting algorithm 45 generates an array of Doppler shifted frequency estimates based on the change of velocity of the mobile node 12 input to the Doppler shifting unit 40 from the velocity calculating unit 35.

The frequency matching algorithm 52 matches a frequency in the array of Doppler shifted frequency estimates to the Doppler shifted transmission frequency $f_{DST}$ of the received Doppler shifted signal. Specifically, the frequency matching algorithm 52 determines which frequency estimate in the array of Doppler shifted frequency estimates most closely matches the Doppler shifted transmission frequency $f_{DST}$. Once the match is determined, the frequency matching algorithm 52 generates a pseudo-transmission frequency $f_{PT}$.

The tracking loop unit 55 synchronizes the pseudo-transmission frequency $f_{PT}$ with the Doppler shifted transmission frequency $f_{DST}$ of the received Doppler shifted signal since the pseudo-transmission frequency $f_{PT}$ is the best estimated frequency for the Doppler shifted transmission frequency $f_{DST}$. The decoding system 60 decodes the associative data contained on the received Doppler shifted signal which is locked to the pseudo-transmission frequency $f_{PT}$. The terms "locking to a frequency" and "tracking a frequency" are used interchangeably throughout this document for describing the ability of the receivers tracking logic to synchronize the estimated signal with the received signal for nominal decoding of the received data. In one implementation of this embodiment, the mobile node 12 is portion of a receiver in a cellular phone located in a moving vehicle.

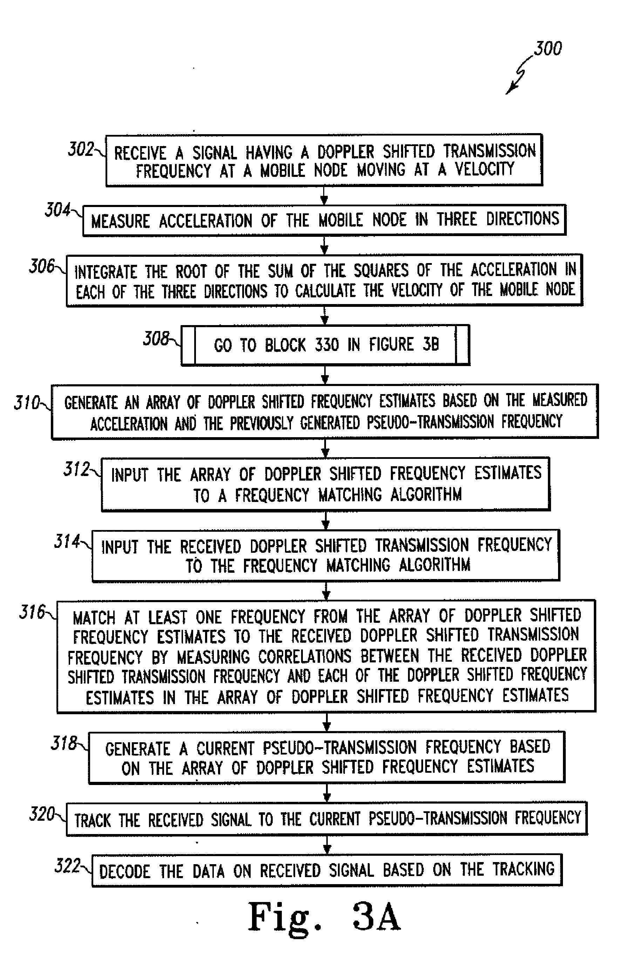

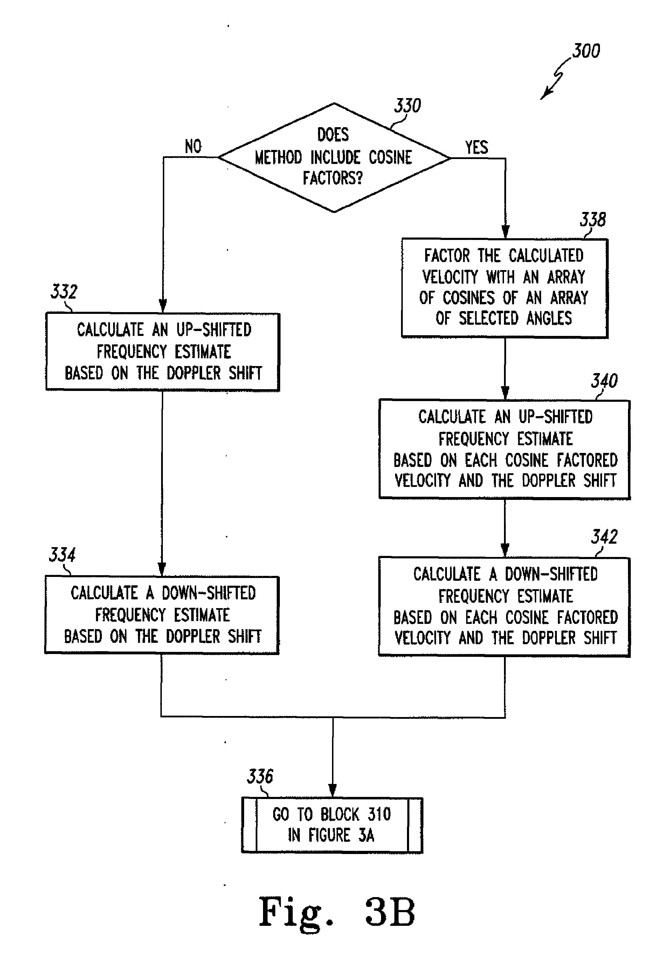

Figures 3A and 3B are flow diagrams of embodiments of a method 300 to reduce Doppler induced errors in mobile nodes 12 of a wireless network 2. The particular embodiments of method 300 shown in Figures 3A and 3B are described here as being implemented using the mobile node 12 in the wireless network 2 described above with reference to Figures 1 and 2. The mobile node 12 includes a program product comprising program instructions, embodied on a storage medium 47, that cause a programmable processor, such as processors 41 and 51, to perform the operations of method 300.

At block 302, the mobile node 12 moving at a velocity 16 receives a Doppler shifted signal 100 having a Doppler shifted transmission frequency $f_{DST}$. In one implementation of this embodiment, the mobile node 12 is located in a vehicle moving with a variable velocity 16. In another implementation of this embodiment, the mobile node 12 is part of a vehicle moving with a variable velocity 16. When the velocity 16 changes, the mobile node 12 accelerates as indicated by the acceleration vector 15.

At block 304, the accelerometer 30 in the velocity calculating unit 35 measures the acceleration 15 of the mobile node 12 in three directions X, Y, and Z (Figure 2). In one implementation of this embodiment, the accelerometer 30 is a micro-electro-mechanical sensor (MEMS) system located in the velocity calculating unit 35 and the mobile node acceleration 15 is measured by the MEMS system located in the velocity calculating unit 35. Other accelerometers are possible.

At block 306, the velocity calculating unit 35 implements algorithms to integrate the root of the sum of the squares of the acceleration 15 measured for each of the three directions X. Y. and Z to calculate the resultant velocity, which is approximately the magnitude of the velocity 16 of the mobile node 12. The calculated resultant velocity

$$V(n) = \int \sqrt{A_X^2(n) + A_Y^2(n) + A_Z^2(n)}$$

is input to the Doppler shifting algorithm 45 as velocity data. $A_i$ indicates the acceleration in the $i^{th}$ direction and n indicates this is the velocity data generated for the $n^{th}$ time during an $n^{th}$ iteration of block 306 in method 300.

At block 308, the flow is directed to block 330 in method 300 of Figure 3B.

At block 330, the Doppler shifting algorithm 45 in the Doppler shifting unit 40 receives the velocity data and, executing on the processor 41, implements one of two exemplary processes to generate frequency estimates. The process includes block 338, block 340 and block 342 if the Doppler shifting algorithm 45 includes cosine factors for the calculated velocity.

If the Doppler shifting algorithm 45 does not include cosine factors for the calculated velocity, the flow proceeds to block 332. At block 332, the Doppler shifting algorithm 45 executing on the processor 41 in the Doppler shifting unit 40, calculates an up-shifted frequency estimate $f_{UP}$ based on the Doppler shift. The up-shifted frequency estimate $f_{UP}$ is at a higher frequency than a previously generated pseudo-transmission frequency. The Doppler shifting algorithm 45 calculates the up-shifted frequency estimate $f_{UP}$ based on the Doppler shift using the algorithm

$$f_{UP} = f_{PG-PT}(n-1)((V_{sound} + V(n))/V_{sound},$$

where $V_{sound}$ is the velocity of sound in air, and $f_{PG-PT}(n-1)$ is the previously generated pseudo-transmission frequency where (n-1) indicates this is the previously generated pseudo-transmission frequency that was generated for the $(n-1)^{th}$ time during an $(n-1)^{th}$ iteration of block 318 (described below) in method 300. The previously generated pseudo-transmission frequency $f_{PG-PT}(n-1)$ is input from the frequency checking unit 50 to the Doppler shifting unit 40 at a previous iteration of method 300. The received Doppler shifted signal 100 is up-shifted from the transmission frequency $f_T$ of the transmission signal 10 (Figure 1) if the mobile node 12 is moving towards the cellular transmission tower 5.

At block 334, the Doppler shifting algorithm 45 executing on the processor 41 in the Doppler shifting unit 40 calculates a down-shifted frequency estimate $f_{DOWN}$ based on the Doppler shift using the algorithm

$$f_{DOWN} = f_{PG-PT}(n-1)((V_{sound} - V(n))/V_{sound}.$$

The down-shifted frequency estimate $f_{DOWN}$ is at a lower frequency than the previously generated pseudo-transmission frequency $f_{PG-PT}$. The received Doppler shifted signal 100 is down-shifted from the transmission frequency $f_T$ of the transmission signal 10 (Figure 1) if the mobile node 12 is moving away from the cellular transmission tower 5.

At block 336, the flow is directed to block 310 of method 300 in Figure 3A.

If the Doppler shifting algorithm 45 includes cosine factors for the calculated velocity, the flow proceeds from block 330 to block 338. At block 338, the Doppler shifting algorithm 45 executing on the processor 41 in the Doppler shifting unit 40 factors the calculated velocity with an array of cosines of an array of selected angles. In one implementation of this embodiment, the selected angles are between 0° and 90°. In another implementation of this embodiment, the cosines of the selected angles are stored in a memory of the mobile node 12. In yet another implementation of this embodiment, the selected angles are stored as a lookup table and the processor 41 takes the cosine of the selected angles and multiplies them by the calculated velocity generated at block 306.

The up-shifted frequency estimate $f_{UP}$ and the down-shifted frequency estimate $f_{DOWN}$ estimates calculated in Block 332 and block 334, respectively, are based on the mobile node 12 moving directly towards or directly away from the cellular transmission tower 5 (Figure 1). If the mobile node 12 is traveling at an angle θ that is other than zero degrees (or 180 degrees) with respect to the wavefront of the transmission signal 10 (Figure 1), the accuracy of the frequency estimates increases if the up-shifted frequency estimate $f_{UP}$ and the down-shifted frequency estimate $f_{DOWN}$ are generated using a calculated velocity that is multiplied by the cosine of the angle θ. Since the direction travel for the mobile node 12 can be any angle with respect to the cellular transmission tower 5, values of the cosines of one or more selected angles between 0° and 90° are stored as an array of cosines in a memory of the mobile node 12.

At block 340, the Doppler shifting algorithm 45 executing on the processor 41 in the Doppler shifting unit 40, calculates an up-shifted frequency estimate $f_{UP}$ based on the Doppler shift and each cosine factored velocity. The up-shifted frequency estimate $f_{UP}$ is at a higher frequency than a previously generated pseudo-transmission frequency. The Doppler shifting algorithm 45 calculates the up-shifted frequency estimate $f_{UP}$ based on the Doppler shift and each cosine factored velocity using the algorithm

$$f_{UP.array} = f_{PG-PT}(n\text{-}1)\left((V_{sound} + \cos(\theta_{array})V(n))/V_{sound}\right.$$

The ups-shifted frequency estimates $f_{UP}$ in the array $f_{UP.array}$ are each at a higher frequency than the previously generated pseudo-transmission frequency $f_{PG\text{-}PT}$.

At block 342, the Doppler shifting algorithm 45 executing on the processor 41 in the Doppler shifting unit 40 calculates a down-shifted frequency estimate $f_{DOWN}$ based on the Doppler shift and each cosine factored velocity using, the algorithm

$$f_{DOWN,array} = f_{PG-PT}(n\text{-}1)\left((V_{sound} - \cos(\theta_{array})V(n))/V_{sound}\right.$$

The down-shifted frequency estimates $f_{DOWN}$ in the array $f_{DOWN,}$ array are each at a lower frequency than the previously generated pseudo-transmission frequency $f_{PG\text{-}PT}$.

In an exemplary embodiment, the $\cos(\theta_{array})$ includes cosines of 30° and 60° (0.866 and 0.5, respectively) which are used to generate the up-shifted frequency estimate $f_{UP}$ to calculate frequency estimates that best correlate to the mobile node 12 traveling towards the cellular transmission tower 5 at a 30° and 60° angle, respectively, with respect to the wavefront of the transmission signal 10. Likewise, the $\cos(\theta_{array})$ [0.866 and 0.5] is multiplied by the down-shifted frequency estimate $f_{DOWN}$ to calculate frequency estimates that best correlate to the mobile node 12 traveling away from the cellular transmission tower 5 at a 30° and 60° angle respectively, with respect to the wavefront of the transmission signal 10. Thus when block 338, block 340 and block 342 are implemented, the probability of an exact match between the received Doppler shifted transmission frequency and one of the adjusted up-shifted frequency estimates $f_{UP}$ or down-shifted frequency estimates $f_{DOWN}$ increases. The increase in probability is proportional to the number of selected angles. The flow of method 300 proceeds to block 336. At block 336. the flow is directed to block 310 of method 300 in Figure 3A.

At block 310, the Doppler shifting algorithm 45 generates an array of Doppler shifted frequency estimates based on the measured acceleration (block 304) and the previously generated pseudo-transmission frequency $f_{PG\text{-}PT}$.In one implementation of this embodiment, the Doppler shifting algorithm 45 concatenates the calculated up-shifted frequency estimate $f_{UP}$ and the calculated down-shifted frequency estimate $f_{DOWN}$ to form a 2 X 1 or a 1 X 2 array of Doppler shifted frequencies estimates. In another implementation of this embodiment, the resultant calculated up-shifted frequency estimates $f_{UP,array}$ and the calculated down-shifted frequency estimates $f_{DOWN,array}$, generated as described above with reference to block 340 and block 342. are compiled into a matrix in order to compensate for non-orthogonal mobile node dynamic affects on the received Doppler shifted signal 100.

At block 312, the Doppler shifting unit 40 inputs the array of Doppler shifted frequency estimates to the frequency matching algorithm 52. At block 314, the antenna 20 inputs the received Doppler shifted transmission frequency $f_{DST}$ to the frequency matching algorithm 52.

At block 316, processor 51 in the frequency checking unit 50 executes the frequency matching algorithm 52 to match at least one frequency from the array of Doppler shifted frequency estimates to the received Doppler shifted transmission frequency $f_{DST}$. The frequency checking unit 50 receives the array of Doppler shifted frequency estimated from the Doppler shifting unit 40 and receives the Doppler shifted transmission frequency $f_{DST}$ from the antenna 20. Specifically, the frequency matching algorithm 52 is executed by processor 51 in the frequency checking unit 50 to measure correlations between the received Doppler shifted transmission frequency $f_{DST}$ and each of the frequencies in the array of Doppler shifted frequency estimates. The correlation measurement comprises, but is not limited to, a direct correlation measurement, a fast Fourier transform correlation measurement, a signal-to-noise-ratio correlation measurement and combinations thereof.

If the mobile node 12 is moving towards the cellular transmission tower 5, the calculated up-shifted frequency $f_{UP}$ or one of the Doppler shifted frequency estimates in the $f_{UP,array}$ most closely matches the received Doppler shifted transmission frequency $f_{DST}$. If the mobile node 12 is moving away from the cellular transmission tower 5, the calculated down-shifted frequency $f_{DOWN}$ or one of the Doppler shifted frequency estimates in the $f_{DOWN,array}$ most closely matches the received Doppler shifted transmission frequency $f_{DST}$.

At block 318, the frequency matching algorithm 52 generates a current pseudo-transmission frequency $f_{PT}$ based on the array of Doppler shifted frequency estimates. In one implementation of this embodiment, the current pseudo-transmission frequency $f_{PT}$ is the frequency from the array of Doppler shifted frequency estimates that matched the received Doppler shifted transmission frequency $f_{DST}$. In another implementation of this embodiment, the current pseudo-transmission frequency $f_{PT}$ is the frequency from the array of Doppler shifted frequency estimates that most closely matched the received Doppler shifted transmission frequency $f_{DST}$.

At block 320, tracking loop unit 55 tracks the Doppler shifted transmission frequency $f_{DST}$ of the received signal 100 to the current pseudo-transmission frequency $f_{PT}$ that was generated during the last iteration of block 318. The tracking loop unit 55 receives the current pseudo-transmission frequency $f_{PT}$ from the frequency matching algorithm 52. The tracking loop unit 55 receives the received Doppler shifted transmission frequency $f_{DST}$ from the antenna 20. The tracking loop unit 55 includes at least one processor that implements one or more algorithms to apply this correction for locking the Doppler shifted transmission frequency $f_{DST}$ of the received signal 100 to the current pseudo-transmission frequency $f_{PT}$. The tracking loops include, but are not limited to, phase locked loops, frequency locked loops, or code locked loops.

At block 322, decoding system 60 decodes the data on the received signal 100 based on the tracking of the Doppler shifted transmission frequency $f_{PT}$ of the received signal 100 to the current pseudo-transmission frequency $f_{PT}$ by the tracking loop unit 55 during block 320. The decoding occurs only after the received signal 100 is locked to the current pseudo-transmission frequency $f_{PT}$.

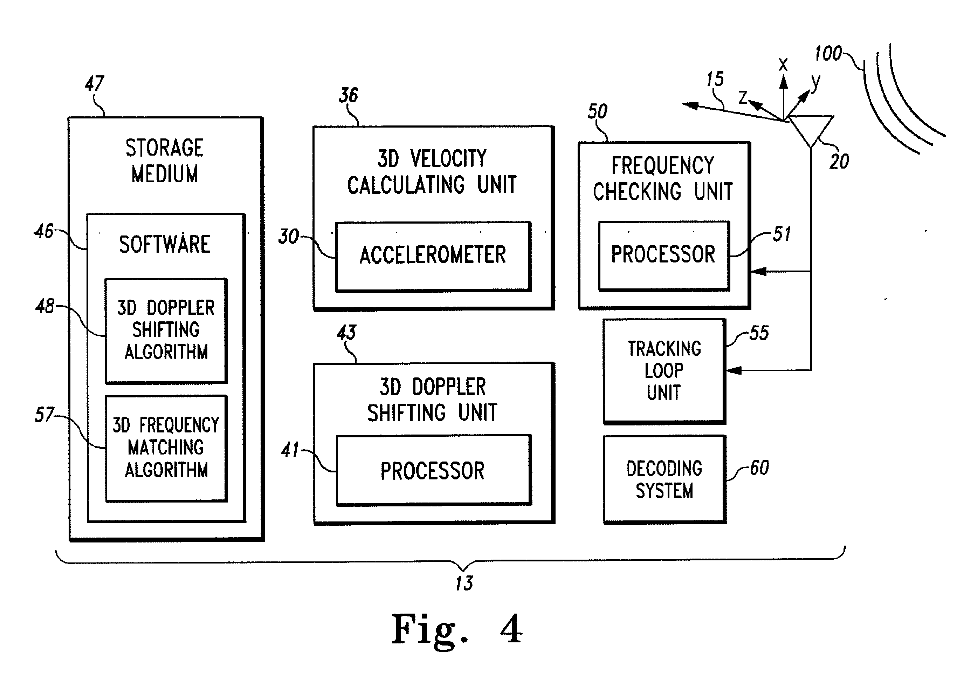

Figure 4 is a block diagram of another embodiment of a mobile node, referred to herein as the mobile node 13. The mobile node 13, also referred to here as Doppler-shift error-reducing mobile node 13, differs from mobile node 12 in that the velocity is calculated in three directions X, Y and Z, referred to here as $V_X$, $V_Y$, and $V_Z$, respectively, and frequency matching is performed for each of the three directions X, Y and Z instead of for variants of the resultant velocity estimates. The Doppler-shift error-reducing mobile node 13 comprises an antenna 20. a three-directional (3D) velocity calculating unit 36, a three-directional (3D) Doppler shifting unit 43, a storage medium 47, a frequency checking unit 50, a tracking loop unit 55, and a decoding system 60. The antenna 20, the tracking loop unit 55, and the decoding system 60 function as described above with reference to Figure 2.

The three-directional velocity calculating unit 36 includes an accelerometer 30 that functions as described above with reference to Figure 2. The three-directional velocity calculating unit 36 determines the velocity $V_X$, $V_Y$, and $V_Z$ of the mobile node 13 by integrating the measurements obtained in each of the three directions X, Y and Z in which the acceleration $A_X$, $A_Y$, and $A_Z$, respectively, is measured. In doing so, the axial magnitudes and directions of the mobile node dynamics are maintained.

The mobile node 13 further comprises software 46. The software 46 comprises appropriate program instructions that, when executed by the processors 41 and 51, cause the processors 41 and 51 to perform the processing described here as being carried out by the software 46. Such program instructions are stored on or otherwise embodied on one or more items of storage media 47 (only one of which is shown in Figure 4).

The software 46 comprises a three-directional (3D) Doppler shifting algorithm 48 which is executed by a processor 41 in the three-directional Doppler shifting unit 43. The software 46 further comprises a three-directional (3D) frequency matching algorithm 57, which is executed by a processor 51 in the frequency checking unit 50.

The three-directional Doppler shifting algorithm 48 generates an array of Doppler shifted frequency estimates based on the calculated velocity $V_X$, $V_Y$, and $V_Z$ of the mobile node 13 received at the three-directional Doppler shifting algorithm 48 from the three-directional velocity calculating unit 36.

The three-directional frequency matching algorithm 57 matches a frequency in the array of Doppler shifted frequency estimates to the Doppler shifted transmission frequency $f_{DST}$ of the received Doppler shifted signal. Once the match is determined, the frequency matching algorithm 57 generates a pseudo-transmission frequency $f_{PT}$.

The tracking loop unit 55 locks the pseudo-transmission frequency $f_{PT}$ with the Doppler shifted transmission frequency $f_{DST}$ of the received Doppler shifted signal, for optimal decoding in order to minimize the bit error rate (BER) and signal degradation. The decoding system 60 decodes the selected received Doppler shifted signal locked to the

pseudo-transmission frequency $f_{PT}$. In one implementation of this embodiment, the mobile node 13 is portion of a receiver in a cellular phone located in a moving vehicle.

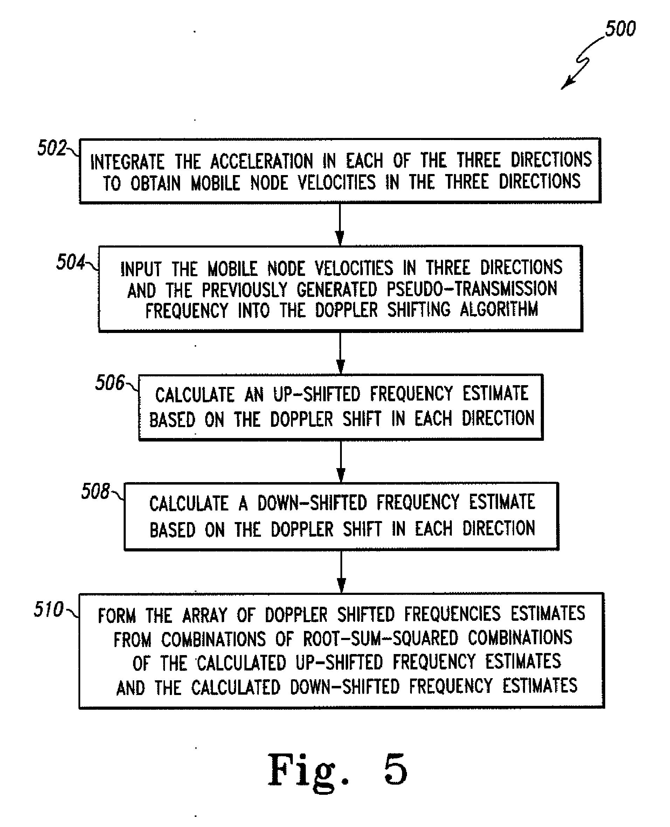

Figure 5 is a flow diagram of one embodiment of portions of a method 500 to reduce Doppler induced errors in mobile nodes 13 of a wireless network 2. The particular embodiment of method 500 shown in Figure 5 is described here as being implemented using the mobile node 13, rather than mobile node 12, in the wireless network 2 described above with reference to Figures 1 and 4. The method 500 describes processes to be implemented with portions of method 300 described above with reference to Figure 3. The mobile nodes 13 include a program product comprising program instructions, embodied on a storage medium 47, that cause a programmable processor, such as processors 41 and 51, to perform the operations of method 500.

Block 502 can be implemented after block 304 is completed in method 300 in place of block 306. At block 502, the three-directional velocity calculating unit 36 integrates the acceleration in each of the three directions X, Y, and Z to obtain mobile node velocities in the three directions X, Y, and Z. The three-directional velocity calculating unit 36 implements algorithms to integrate the acceleration $A_X$, $A_Y$, and $A_Z$ measured for each of the three directions X, Y, and Z to calculate the velocity $V_X$, $V_Y$, and $V_Z$ of the mobile node 13. The algorithms to calculate the velocities $V_X$, $V_Y$, and $V_Z$ are:

$$V_X(n) = \int A_X(n)$$

$$V_Y(n) = \int A_Y(n)$$

$$V_Z(n) = \int A_Z(n)$$

$V_i$ indicates the velocity in the $i^{th}$ direction and n indicates this is the velocity data is generated for the $n^{th}$ time.

At block 504, the three-directional velocity calculating unit 36 inputs the mobile node velocity in three directions $V_X$, $V_Y$, and $V_Z$ into the three-directional Doppler shifting algorithm 48. Additionally, the frequency checking unit 50 inputs the previously generated pseudo-transmission frequency $f_{PG-PT}(n-1)$ into the three-directional Doppler shifting algorithm 48. The previously generated pseudo-transmission frequency $f_{PG-PT}(n-1)$ is input to the three-directional Doppler shifting algorithm 48 after the previously generated pseudo-transmission frequency is generated for the $(n-1)^{th}$ time by (n-1) iterations of block 318 in method 300.

Block 506 replaces block 332 or blocks 338-340 in method 300 as shown in Figure 3B. At block 506, processor 41 executes the three-directional Doppler shifting algorithm 48 to calculate an up-shifted frequency estimate $f_{UP,X}$, $f_{UP,Y}$, and $f_{UP,Z}$ based on the Doppler shift in each direction X, Y, and Z, respectively. Each of the up-shifted frequency estimates $f_{UP,X}$, $f_{UP,Y}$, and $f_{UP,Z}$ are at a higher frequency than the previously generated pseudo-transmission frequency $f_{PG-PT}$.

Block 508 replaces block 334 or block 342 in method 300 as shown in Figure 3B. At block 508, the processor 41 executes the three-directional Doppler shifting algorithm 48 to calculate a down-shifted frequency based on the Doppler shift estimate $f_{DOWN,X}$, $f_{DOWN,Y}$, and $f_{DOWN,Z}$ in each direction X, Y, and Z, respectively. The down-shifted frequency estimate $f_{DOWN,X}$, $f_{DOWN,Y}$, and $f_{DOWN,Z}$ in each direction X. Y, and Z is at a lower frequency than the previously generated pseudo-transmission frequency $f_{PG-PT}$.

Block 510 replaces block 310 in method 300 as shown in Figure 3A. At block 510. the processor 41 executes the three-directional Doppler shifting algorithm 48 to form the array of Doppler shifted frequency estimates from combinations of root-sum-squared combinations of the calculated up-shifted frequency estimates and the calculated down-shifted frequency estimates. Thus, when method 500 is implemented as described with portions of method 300, the array of Doppler shifted frequency estimates includes a down-shifted frequency in an X direction, a down-shifted frequency in a Y direction, a down-shifted frequency in a Z direction, an up-shifted frequency in an X direction, an up-shifted frequency in a Y direction, and an up-shifted frequency in a Z direction and the up and down shifted root-sum-squared combinations thereof. Thus, using the measured changes in directional velocity combinations, the Doppler shifting algorithm 48 determines the impacts on the received Doppler shifted signal 100 due to the linear changes in velocity combinations in order to determine the most representative Doppler estimate.

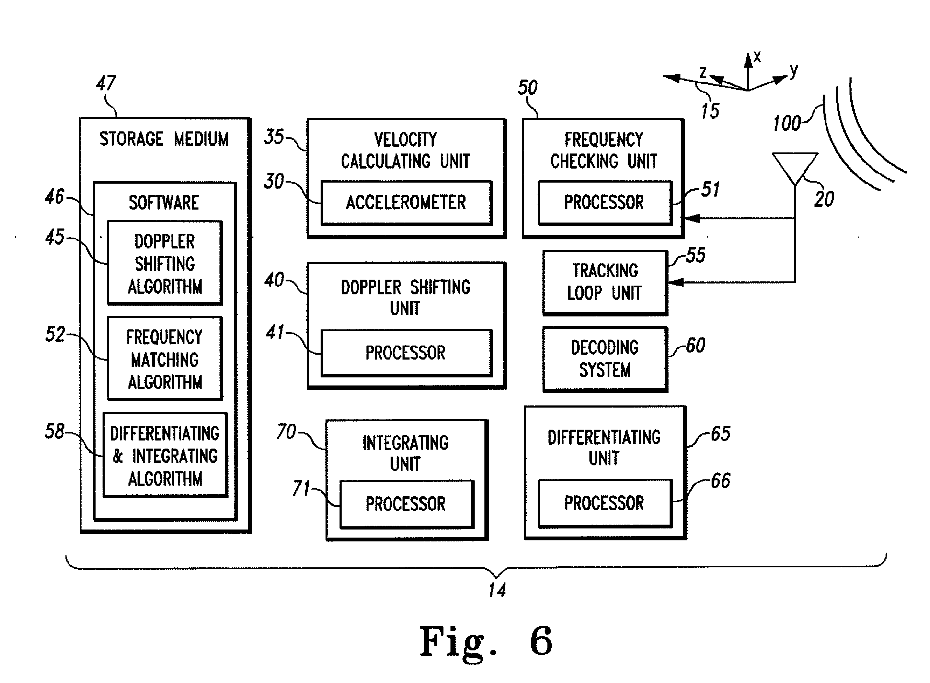

Figure 6 is a block diagram of another embodiment of the mobile nodes 12 and 13, herein referred as the mobile node 14. The mobile node 14, also referred to here as Doppler-shift error-reducing mobile node 14, differs from mobile node 12 in that the mobile node 14 differentiates the elements in the array of Doppler shifted frequency estimates generated by the Doppler, shifting unit 40 and then the frequency checking unit 50 does a frequency check against the differentiated received transmission frequency. Thus, mobile node 14 generates an array of differentiated Doppler shifted frequency estimates.

The mobile node 14 comprises the antenna 20, the velocity calculating unit 35, the Doppler shifting unit 40, a storage medium 47, the frequency checking unit 50, the tracking loop unit 55, and the decoding system 60 that perform the functions described above with reference to the mobile node 12 of Figure 2. The mobile node 14 also includes a differentiating unit 65 and an integrating unit 70. The software 46 comprises the differentiating and integrating algorithm 58 in addition to the Doppler shifting algorithm 45 and the frequency matching algorithm 52. The differentiating and integrating algorithm 58 is executed by a processor 66 and processor 71 in the differentiating unit 65 and the integrating unit 70, respectively. Thus, the software 46 comprises appropriate program instructions that, when executed by the processors 41, 51, 66 and 71, cause the processors 41, 51, 66 and 71 to perform the processing described here as being carried out by the software 46. Such program instructions are stored on or otherwise embodied on one or more items of storage media 47 (only one of which is shown in Figure 6).

The differentiating unit 65 determines the rate of change of the frequencies in the array of Doppler shifted frequency estimates generated by the Doppler shifting unit 40 and generates an array of differentiated Doppler shifted frequency estimates. In this implementation the mobile node 14. the frequency checking unit 50 determines the rate of change of the frequency of the received Doppler shifted signal and matches a differentiated frequency in the array of differentiated Doppler shifted frequency estimates to the differentiated received Doppler shifted transmission frequency $f_{\Delta DTS}$ to form the matched differentiated pseudo-transmission frequency $f_{\Delta PT}$.

The integrating unit 70 integrates the best estimate differentiated pseudo-transmission frequency $f_{\Delta PT}$, which then becomes the previously generated pseudo-transmission frequency $f_{PG-PT}(n-1)$ estimate.

In one implementation of this embodiment, the mobile node 14 differs from mobile node 13 of Figure 4 in that the mobile node 14 differentiates the array of Doppler shifted frequencies generated by the three-directional Doppler shifting unit 43 and then the frequency checking unit 50 does a frequency check to match the differentiated transmission frequency $f_{\Delta PT}$ with the differentiated array of Doppler shifted frequencies. In this case, the array of Doppler shifted frequencies is formed from combinations of root-sum-squared combinations of the differentiated calculated up-shifted frequencies in the three dimensions and the differentiated calculated down-shifted frequencies in the three dimensions. In another implementation of this embodiment, the mobile node 14 is portion of a receiver in a cellular phone located in a moving vehicle.

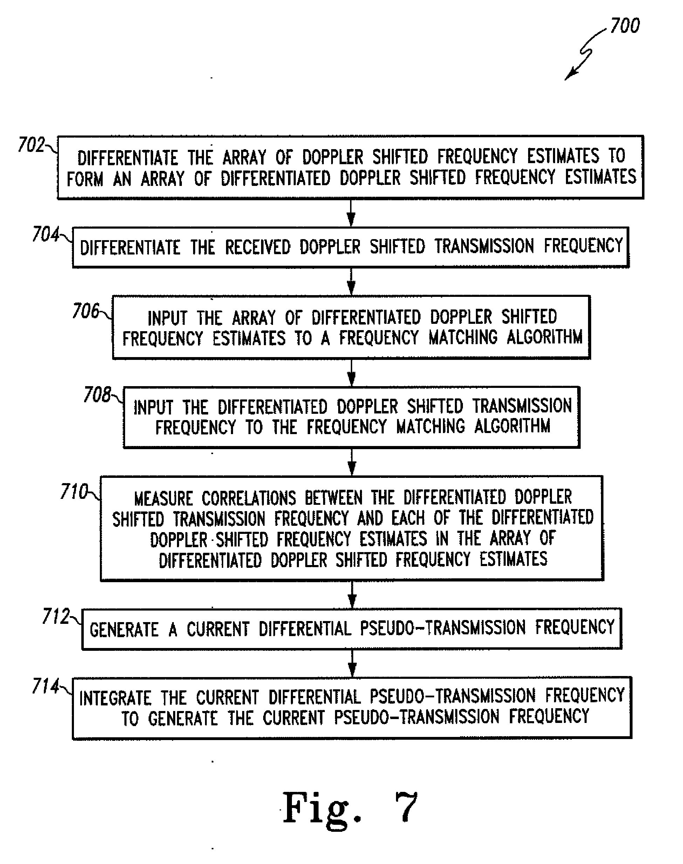

Figure 7 is a flow diagram of one embodiment of portions of a method to reduce Doppler induced errors in mobile nodes of a wireless network. The particular embodiment of method 700 shown in Figure 7 is described here as being implemented using the mobile node 14, rather than mobile node 12, in the wireless network 2 described above with reference to Figures 1 and 6. The method 700 describes processes to be implemented with portions of method 300 described above with reference to Figure 3A and 3B. This embodiment is not limited to the node 12 implementation, but is easily adaptable to node 13 as presented herein. The mobile nodes 14 include a program product comprising program instructions, embodied on a storage medium 47, that cause a programmable processor, such as processors 41,51,66 and 71 to perform the operations of method 700.

Block 702 can be implemented after block 336 is completed in method 300 as shown in Figure 3B in place of block 310. At block 702, the differentiating and integrating algorithm 58 is executed by a processor 66 in the differentiating unit 65 to differentiate the array of Doppler shifted frequencies to form an array of differentiated Doppler shifted frequencies. The array of differentiated Doppler shifted frequency estimates includes an up-shifted differentiated frequency and a down-shifted differentiated frequency.

In one implementation of this embodiment, the mobile node implements a differentiation for each of the three orthogonal directions X, Y, and Z. In this implementation, the mobile node includes three-directional Doppler shifting algorithm 48, three-directional frequency matching algorithm 57 and differentiating and integrating algorithm 58. In this case, methods 300 and 500 are implemented as described above with reference to Figure 5 wherein block 702 replaces block 510 in method 500. In this case, the array of differentiated Doppler shifted frequencies includes a down-shifted differentiated frequency in an X direction, a down-shifted differentiated frequency in a Y direction, a down-shifted differentiated frequency in a Z direction, an up-shifted differentiated frequency in an X direction, an up-shifted differentiated frequency in a Y direction, and an up-shifted differentiated frequency in a Z direction and the up and down shifted root-sum-squared combinations thereof. One of the calculated directional velocity combinations is correlated linear changes in velocity 16 of the mobile node 14 that impact the received signal 100 as a Doppler shift.

At block 704, the differentiating and integrating algorithm 58 is executed by the processor 66 in the differentiating unit 65 to differentiate the received Doppler shifted transmission frequency $f_{DST}$. The received Doppler shifted transmission frequency $f_{DST}$, is input from the antenna 20 to the differentiating and integrating algorithm 58.

At block 706, the differentiating and integrating algorithm 58 inputs the array of differentiated Doppler shifted frequencies to the frequency matching algorithm 52. Block 706 replaces block 312 in method 300 as shown in Figure 3A. At block 708, the differentiating and integrating algorithm 58 inputs the differentiated Doppler shifted transmission

frequency $f_{\Delta DST}$ to the frequency matching algorithm 52. Block 708 replaces block 314 in method 300 as shown in Figure 3A.

At block 710, the frequency matching algorithm 52 executed by processor 51 measures correlations between the differentiated Doppler shifted transmission frequency $f_{\Delta DST}$ and each of the differentiated Doppler shifted frequencies in the array of differentiated Doppler shifted frequency estimates. The correlation measurement comprises, but not limited to, a direct correlation measurement, a fast Fourier transform correlation measurement, a signal-to-noise-ratio correlation measurement and combinations thereof. Block 710 replaces block 316 in method 300 as shown in Figure 3A.

At block 712. the frequency matching algorithm 52 executed by processor 51 generates a current differential pseudo-transmission frequency $f_{\Delta PT}$. The differentiated Doppler shifted frequency estimate in the array of differentiated Doppler shifted frequencies that most closely matches the differentiated Doppler shifted transmission frequency $f_{\Delta DST}$ is the current differential pseudo-transmission frequency $f_{\Delta PT}$. Block 712 replaces block 318 in method 300 as shown in Figure 3A.

At block 714, the differentiating and integrating algorithm 58 is executed by a processor 7] in the integrating unit 70 to integrate the current differential pseudo-transmission frequency $f_{\Delta PT}$ to generate the current pseudo-transmission frequency $f_{PT}$. The current pseudo-transmission frequency is also the previously generated pseudo-transmission frequency to be used in the next iteration of method 700 by the mobile node 14. The current pseudo-transmission frequency $f_{PT}$ is stored in a memory (not shown) of Doppler shifting unit 40. In one implementation of this embodiment, the current differential pseudo-transmission frequency $f_{\Delta PT}$ is stored in a memory (not shown) of Doppler shifting unit 40.

In this manner the mobile nodes 12,13 and 14 are operable in a system such as wireless network 2 to determine a Doppler shift in a received wireless signal, to generate a pseudo-transmission frequency signal that most closely matches, the received Doppler shifted signal and to lock the received signal 100 to the pseudo-transmission frequency signal. The current pseudo-transmission frequency functions as the previously generated pseudo-transmission frequency for each subsequent implementation of methods 300, 500 and 600 for mobile nodes 12, 13, and 14, respectively.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory.

Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs)."

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. A method to reduce Doppler induced errors in mobile nodes 12 of a wireless network 2, the method comprising:

receiving a Doppler shifted signal 100 having a Doppler shifted transmission frequency $f_{DST}$ at a mobile node 12 moving at a velocity 16;
measuring an acceleration 15 of the mobile node 12 in three directions;
generating an array of Doppler shifted frequency estimates based on the measured acceleration and a previously generated pseudo-transmission frequency $f_{PG-PT}$ (n-1);
generating a current pseudo-transmission frequency $f_{PT}$ based on the array of Doppler shifted frequency estimates; and
tracking the Doppler shifted transmission frequency $f_{DST}$ of the received signal to the current pseudo-transmission frequency $f_{PT}$.

**2.** The method of claim 1, further comprising:

calculating the velocity 16 of the mobile node based on the measured acceleration; and
decoding data on the received signal 100 based on the tracking.

**3.** The method of claim 2, wherein calculating the velocity 16 further comprises:

integrating the root of the sum of the squares of the acceleration 15 in each of the three directions.

**4.** The method of claim 2. wherein calculating a velocity 16 further comprises:

integrating the acceleration $A_X$, $A_Y$, and $A_Z$ in each of the three directions to obtain mobile node velocities $V_X$, $V_Y$, and $V_Z$ in the three directions.

**5.** The method of claim 1, the method further comprising:

differentiating the array of Doppler shifted frequency estimates to form an array of differentiated Doppler shifted frequency estimates;
differentiating the received Doppler shifted transmission frequency; and
generating a current differential pseudo-transmission frequency $f_{\Delta PT}$.

**6.** The Method of claim 1, wherein the mobile node acceleration is measured by a micro-electro-mechanical sensor system.

**7.** A Doppler-shift error-reducing mobile node 12 in a wireless network 2, the mobile node 12 comprising:

an antenna 20 adapted to receive a Doppler shifted signal 100 having a Doppler shifted transmission frequency $f_{DST}$, wherein the Doppler shifted signal is emitted from a transmitter 5 as a transmission signal 10 having a transmission frequency $f_T$;
a velocity calculating unit 35 including an accelerometer 30 adapted to determine a velocity 15 of the mobile node 12;
a Doppler shifting unit 40 adapted to generate an array of Doppler shifted frequency estimates based on the change in velocity 16 of the mobile node 12;
a frequency checking unit 50 adapted to match a frequency in the array of Doppler shifted frequency estimates to the Doppler shifted transmission frequency of the received Doppler shifted signal 100 and to generate a pseudo-transmission frequency $f_{PT}$; and
a tracking loop unit 55 adapted to synchronize the pseudo-transmission frequency $f_{PT}$ with the received Doppler shifted signal 100, wherein the pseudo-transmission frequency $f_{PT}$ is about the transmission frequency $f_T$.

**8.** The mobile node 12 of claim 7, the mobile node further comprising:

a decoding system 60 to decode associative data contained on the received Doppler shifted signal synchronized to the pseudo-transmission frequency $f_{PT}$.

**9.** The mobile node 12 of claim 8, the mobile node 12 further comprising:

a differentiating unit 65 adapted to determine the rate of change of the frequencies in the array of Doppler shifted frequency estimates and adapted to generate an array of differentiated Doppler shifted frequency estimates; and
an integrating unit 70 adapted to integrate a matched differentiated pseudo-transmission frequency, wherein the frequency checking unit 50 is adapted to determine a rate of change of the frequency of the received Doppler shifted signal and to match a differentiated frequency in the array of differentiated Doppler shifted frequency estimates to the differentiated received Doppler shifted transmission frequency to form the matched differentiated pseudo-transmission frequency.

**10.** A program product comprising program instructions, embodied on a storage medium, that are adapted to cause a programmable processor to:

receive a signal having a Doppler shifted transmission frequency $f_{DST}$ at a mobile node 120 moving at a velocity 16;

measure a mobile node acceleration $A_X$, $A_Y$, and $A_Z$ in three directions;

generate an array of Doppler shifted frequency estimates based on the measured acceleration and a previously generated pseudo-transmission frequency $f_{PG-PT}$ (n-1);

generate a current pseudo-transmission frequency $f_{PT}$ based on the array of Doppler shifted frequency estimates;

track the Doppler shifted transmission frequency $f_{DST}$ of the received signal to the current pseudo-transmission frequency $f_{PT}$;

decode the data on the received signal based on the tracking of Doppler shifted transmission frequency $f_{DST}$ of the received signal to the current pseudo-transmission frequency $f_{PT}$; and

update the current pseudo-transmission frequency $f_{PT}$.

EP 1 835 637 A2

**MOBILE NODE**

15

16

12

100

10

5

2

Fig. 1

Fig. 2

EP 1 835 637 A2

*300*

┌─────────────────────────────────────────────────────────────────┐
│ 302 │ RECEIVE A SIGNAL HAVING A DOPPLER SHIFTED TRANSMISSION     │
│      │ FREQUENCY AT A MOBILE NODE MOVING AT A VELOCITY            │
└─────────────────────────────────────────────────────────────────┘

┌─────────────────────────────────────────────────────────────────┐
│ 304 │ MEASURE ACCELERATION OF THE MOBILE NODE IN THREE DIRECTIONS │
└─────────────────────────────────────────────────────────────────┘

┌─────────────────────────────────────────────────────────────────┐
│ 306 │ INTEGRATE THE ROOT OF THE SUM OF THE SQUARES OF THE         │
│      │ ACCELERATION IN EACH OF THE THREE DIRECTIONS TO CALCULATE  │
│      │ THE VELOCITY OF THE MOBILE NODE                            │
└─────────────────────────────────────────────────────────────────┘

┌─────────────────────────────────────────────────────────────────┐
│ 308 │ GO TO BLOCK 330 IN FIGURE 3B                                │
└─────────────────────────────────────────────────────────────────┘

┌─────────────────────────────────────────────────────────────────┐
│ 310 │ GENERATE AN ARRAY OF DOPPLER SHIFTED FREQUENCY ESTIMATES    │
│      │ BASED ON THE MEASURED ACCELERATION AND THE PREVIOUSLY      │
│      │ GENERATED PSEUDO-TRANSMISSION FREQUENCY                    │
└─────────────────────────────────────────────────────────────────┘

┌─────────────────────────────────────────────────────────────────┐
│ 312 │ INPUT THE ARRAY OF DOPPLER SHIFTED FREQUENCY ESTIMATES      │
│      │ TO A FREQUENCY MATCHING ALGORITHM                          │
└─────────────────────────────────────────────────────────────────┘

┌─────────────────────────────────────────────────────────────────┐
│ 314 │ INPUT THE RECEIVED DOPPLER SHIFTED TRANSMISSION FREQUENCY   │
│      │ TO THE FREQUENCY MATCHING ALGORITHM                        │
└─────────────────────────────────────────────────────────────────┘

┌─────────────────────────────────────────────────────────────────┐
│ 316 │ MATCH AT LEAST ONE FREQUENCY FROM THE ARRAY OF DOPPLER      │
│      │ SHIFTED FREQUENCY ESTIMATES TO THE RECEIVED DOPPLER        │
│      │ SHIFTED TRANSMISSION FREQUENCY BY MEASURING CORRELATIONS   │
│      │ BETWEEN THE RECEIVED DOPPLER SHIFTED TRANSMISSION          │
│      │ FREQUENCY AND EACH OF THE DOPPLER SHIFTED FREQUENCY        │
│      │ ESTIMATES IN THE ARRAY OF DOPPLER SHIFTED FREQUENCY        │
│      │ ESTIMATES                                                  │
└─────────────────────────────────────────────────────────────────┘

┌─────────────────────────────────────────────────────────────────┐
│ 318 │ GENERATE A CURRENT PSEUDO-TRANSMISSION FREQUENCY BASED      │
│      │ ON THE ARRAY OF DOPPLER SHIFTED FREQUENCY ESTIMATES        │
└─────────────────────────────────────────────────────────────────┘

┌─────────────────────────────────────────────────────────────────┐
│ 320 │ TRACK THE RECEIVED SIGNAL TO THE CURRENT                    │
│      │ PSEUDO-TRANSMISSION FREQUENCY                              │
└─────────────────────────────────────────────────────────────────┘

┌─────────────────────────────────────────────────────────────────┐
│ 322 │ DECODE THE DATA ON RECEIVED SIGNAL BASED ON THE TRACKING    │
└─────────────────────────────────────────────────────────────────┘

# Fig. 3A

*300*

*330*

DOES
METHOD INCLUDE COSINE
FACTORS?

NO

YES

*338*

FACTOR THE CALCULATED
VELOCITY WITH AN ARRAY
OF COSINES OF AN ARRAY
OF SELECTED ANGLES

*332*

CALCULATE AN UP-SHIFTED
FREQUENCY ESTIMATE
BASED ON THE DOPPLER SHIFT

*340*

CALCULATE AN UP-SHIFTED
FREQUENCY ESTIMATE
BASED ON EACH COSINE FACTORED
VELOCITY AND THE DOPPLER SHIFT

*334*

CALCULATE A DOWN-SHIFTED
FREQUENCY ESTIMATE
BASED ON THE DOPPLER SHIFT

*342*

CALCULATE A DOWN-SHIFTED
FREQUENCY ESTIMATE
BASED ON EACH COSINE FACTORED
VELOCITY AND THE DOPPLER SHIFT

*336*

GO TO BLOCK 310
IN FIGURE 3A

Fig. 3B

Fig. 4

```
500
```

502 — INTEGRATE THE ACCELERATION IN EACH OF THE THREE DIRECTIONS TO OBTAIN MOBILE NODE VELOCITIES IN THE THREE DIRECTIONS

504 — INPUT THE MOBILE NODE VELOCITIES IN THREE DIRECTIONS AND THE PREVIOUSLY GENERATED PSEUDO-TRANSMISSION FREQUENCY INTO THE DOPPLER SHIFTING ALGORITHM

506 — CALCULATE AN UP-SHIFTED FREQUENCY ESTIMATE BASED ON THE DOPPLER SHIFT IN EACH DIRECTION

508 — CALCULATE A DOWN-SHIFTED FREQUENCY ESTIMATE BASED ON THE DOPPLER SHIFT IN EACH DIRECTION

510 — FORM THE ARRAY OF DOPPLER SHIFTED FREQUENCIES ESTIMATES FROM COMBINATIONS OF ROOT-SUM-SQUARED COMBINATIONS OF THE CALCULATED UP-SHIFTED FREQUENCY ESTIMATES AND THE CALCULATED DOWN-SHIFTED FREQUENCY ESTIMATES

# Fig. 5

Fig. 6

700

702 — DIFFERENTIATE THE ARRAY OF DOPPLER SHIFTED FREQUENCY ESTIMATES TO FORM AN ARRAY OF DIFFERENTIATED DOPPLER SHIFTED FREQUENCY ESTIMATES

704 — DIFFERENTIATE THE RECEIVED DOPPLER SHIFTED TRANSMISSION FREQUENCY

706 — INPUT THE ARRAY OF DIFFERENTIATED DOPPLER SHIFTED FREQUENCY ESTIMATES TO A FREQUENCY MATCHING ALGORITHM

708 — INPUT THE DIFFERENTIATED DOPPLER SHIFTED TRANSMISSION FREQUENCY TO THE FREQUENCY MATCHING ALGORITHM

710 — MEASURE CORRELATIONS BETWEEN THE DIFFERENTIATED DOPPLER SHIFTED TRANSMISSION FREQUENCY AND EACH OF THE DIFFERENTIATED DOPPLER SHIFTED FREQUENCY ESTIMATES IN THE ARRAY OF DIFFERENTIATED DOPPLER SHIFTED FREQUENCY ESTIMATES

712 — GENERATE A CURRENT DIFFERENTIAL PSEUDO-TRANSMISSION FREQUENCY

714 — INTEGRATE THE CURRENT DIFFERENTIAL PSEUDO-TRANSMISSION FREQUENCY TO GENERATE THE CURRENT PSEUDO-TRANSMISSION FREQUENCY

Fig. 7